Europäisches Patentamt

European Patent Office

Office européen des brevets

(11) Publication number: **0 686 687 A1**

# EUROPEAN PATENT APPLICATION

(21) Application number: **94304197.0**

(22) Date of filing: **10.06.94**

(51) Int. Cl.6: **C10G 47/12**, B01J 35/10

(43) Date of publication of application:
**13.12.95 Bulletin 95/50**

(84) Designated Contracting States:
**AT DE ES FR GB IT NL**

(71) Applicant: **TEXACO DEVELOPMENT CORPORATION**
**2000 Westchester Avenue**
**White Plains,**
**New York 10650 (US)**

(72) Inventor: **Dai, Pei-Shing Eugene**
**3437 Brittany**
**Port Arthur,**
**Texas 77642 (US)**
Inventor: **Martin, Bobby Ray**
**285 East Caldwood Drive**

**Beaumont,**
**Texas 77707 (US)**
Inventor: **Campbell, Charles Nelson, II**
**3920 Highway 365,**
**Apt. 248**
**Port Arthur,**
**Texas 77642 (US)**
Inventor: **Petty, Randall Hughes**
**713 Hebert Woods Drive**
**Port Neches,**
**Texas 77651 (US)**

(74) Representative: **Watkins, David et al**
**Urquhart-Dykes & Lord,**
**91 Wimpole Street**
**London W1M 8AH (GB)**

(54) **Mild hydrocracking of heavy hydrocarbon feedstocks employing silica-alumina catalysts**

(57) A catalyst comprising 2.0 to 6.0 wt.% of an oxide of a Group VIII metal, 12.0 to 25.0 wt.% of an oxide of molybdenum and 0 to 3.0 wt.% of an oxide of phosphorus, supported on a porous alumina support containing 4.0 to 30 wt.% of silica can be used in a mild hydrocracking process for the hydrodemetallation (HDM), hydrodesulphurization (HDS) and hydroconversion (HC) of hydrocarbon feedstocks, such as residuum feedstocks which provides increased conversion of the hydrocarbons boiling above 540°C into hydrocarbons boiling below 540°C, and increased yields of middle distillates.
The catalyst has a molybdenum gradient (MbG) of 1.0 to 10.0, MbG being defined by the ratio

$$MbG = \frac{Mb: Al \text{ atomic ratio for catalyst pellet exterior}}{Mb: Al \text{ atomic ratio for catalyst pellet interior}}$$

and a specific pore diameter distribution.

EP 0 686 687 A1

This invention relates to a process for mild hydrocracking of heavy oils. More particularly, this invention relates to a catalytic process for converting heavy oils boiling above 345°C, such as vacuum gas oil (VGO) and VGO containing a high proportion of vacuum residuum (VR), into light distillate products boiling at or below 345°C.

In the mild hydrocracking process of this invention, a sulphur- and metal-containing hydrocarbon feedstock, such as a residua-containing heavy oil, is contacted at an elevated temperature with hydrogen and a catalyst composition comprising a specified amount of a Group VIII metal, such as an oxide of nickel or cobalt, a specified amount of an oxide of molybdenum and, optionally, a specified amount of an oxide of phosphorus, such as phosphorus pentoxide, supported on a porous silica-containing alumina support. In the catalytic mild hydrocracking process of the invention the hydrocarbon feed is contacted with hydrogen and the catalyst, which has a specified pore size distribution, and a molybdenum distribution, in a manner such that a substantially higher conversion of hydrocarbons boiling above 540°C into light product is achieved compared with that obtained with prior art hydroprocessing catalysts, while at the same time high levels of sediment formation are avoided.

US-A-4941964 discloses a process for the hydrotreatment of a sulphur- and metal-containing hydrocarbon feed in such a manner that the catalyst is maintained at isothermal conditions and is exposed to a uniform quality of feed. The catalyst comprises 3.0 to 5.0 wt.% of an oxide of a Group VIII metal, and 0 to 24.0 wt.% of an oxide of a Group VIB metal, 14.5 to 2.0 wt.% of an oxide of phosphorus, on a porous alumina support having a total surface area of 150 to 210 $m^2/g$ and a total pore volume (TPV) of 0.50 to 0.75 $cm^3/g$, with a porediameter distribution such that micropores having diameters of 10 to 16 nm (100 to 160Å) constitute 70 to 85% of the total pore volume of the catalysts and macropores having diameters of greater than 25 nm constitute 5.5 to 22.0% of the total pore volume of the catalyst.

US-A-4670132 discloses a catalyst composition useful in the hydroconversion of heavy oils, which comprises a high iron content bauxite with the addition of one or more of the following promoters: phosphorus, molybdenum, cobalt, nickel or tungsten. The bauxite catalysts typically contain 25 to 35 wt.% aluminium. The catalysts have certain characteristic features for the elemental components (including aluminium and where present, molybdenum) when the pellet exteriors are examined in the fresh oxide state using X-ray photoelectron spectroscopy (XPS). For those catalysts which contain molybdenum, the surface Mo/Al atomic ratios on the pellet exteriors are in the range of 0.03 to 0.09.

US-A-4652545 discloses a catalyst composition useful in the hydroconversion of heavy oils, which contains 0.5 to 5% Ni or Co, and 1.8 to 18% Mo (calculated as the oxides), on a porous alumina support, e.g. containing a minor amount of silica, having 15 to 30% of the Ni or Co in an acid-extractable form, and further characterised by having a TPV of 0.15 to 1.5 $cm^3/g$, with a pore diameter distribution such that (i) at least 70% TPV is in pores having 8 - 12 nm (80 to 120Å) diameters, (ii) less than 0.03 $cm^3/g$ of TPV (6% TPV) is in pores having diameters of less than 8 nm (80Å) and (iii) 0.05 to 0.1 $cm^3/g$ of TPV (3 to 20% TPV) is in pores having diameters greater than 12 nm (120Å). Although US-A-4652545 teaches that having a proportion of nickel or cobalt contained in the catalyst in an acid extractable form is advantageous in terms of heavy oil hydroconversion, it does not suggest that catalysts which have a prescribed molybdenum gradient are advantageous in heavy oil hydroconversion.

US-A-4588709 discloses a catalyst composition useful in the hydroconversion of heavy oils, which comprises 5 to 30 wt.% of a Group VIB element (e.g. molybdenum) and 1 to 5 wt.% of a Group VIII element (e.g. nickel). The finished catalysts have average pore diameters of 15 to 30 nm (150 to 300 Angstroms), and have certain characteristic features of the active components (Mo and Ni) when the pellet exteriors are examined in a sulphided state using X-ray photoelectron spectroscopy (XPS).

US-A-4579649 discloses a catalyst composition useful in the hydroconversion of heavy oils, containing a Group VIB element (e.g. molybdenum), a Group VIII element (e.g. nickel) and phosphorus oxide on a porous alumina support. The catalyst has certain characteristic features for the three active components (Mo, Ni and P) where the pellet exteriors are examined in a sulphided state using X-ray photoelectron spectroscopy (XPS).

US-A-4520128 discloses a catalyst composition useful in the hydroconversion of heavy oils, containing 5 to 30 wt.% of a Group VIB element (e.g. molybdenum), 0.1 to 8.0 wt.% of a Group VIII element (e.g. nickel) and a relatively high (5 to 30 wt.%) content of a phosphorus oxide on a porous alumina support. The finished catalysts have mean pore diameters of 14.5 to 15.4 nm (145 to 154 Angstroms). Again, the catalyst has certain characteristic features for the three active components (Mo, Ni and P) when the pellet exteriors are examined in a sulphided state using X-ray photoelectron spectroscopy (XPS).

US-A-5047142 discloses a process of hydroprocessing a sulphur- and metal-containing hydrocarbon feed under isothermal conditions with a uniform quality of feed. The catalyst has a composition comprising 1.0 to 5.0 wt.% of an oxide or nickel or cobalt, and 10.0 to 25.0 wt.% of an oxide of molybdenum, on a

porous alumina support in such a manner that the molybdenum gradient of the catalyst has a value of less than 6.0, with 15 to 30% of the nickel or cobalt in an acid-extractable form. The catalyst also has a total surface area of 150 to 210 $m^2$/g, a total pore volume of 0.50 to 0.75 $cm^3$/g, and a pore size distribution such that pores having diameters of less than 10 nm (100Å) constitute less than 25.0%, pores having diameters of 1.0 to 16 nm (100 to 160Å) constitute 70.0 to 85.0% and pores having diameters greater than 25 nm (250Å) constitute 10 to 15.0% of the total pore volume of said catalyst.

US-A-4886582 discloses a catalyst comprising at least one metal hydrogenating component comprising Group VIB, such as molybdenum, or Group VIII metal, such as nickel, on a porous refractory oxide, such as lithia-alumina or silica-alumina, comprising less than 15 wt.% of said metal hydrogenation component calculated as the trioxide, and having a pore size distribution where at least 75% of the total pore volume is in pores of diameters from 2 nm (20 Angstroms) below the pore mode diameter to 2 nm (20 Angstroms) above the pore mode diameter, less than 10% of the total pore volume is in pores of diameters less than 6 nm (60 Angstroms) and 3 to 10% of the total pore volume is in pores greater than 11 nm (110 Angstroms) and the pore mode diameter is 7 to 9 nm (70 to 90 Angstroms).

US-A-4846961 discloses a hydroprocessing catalyst containing nickel, phosphorus, and 19 to 21.5 wt.% of molybdenum ($MoO_3$) on a porous refractory oxide, such as silica-alumina. The catalyst has a narrow pore size distribution wherein at least 75% of the pore volume is in pores of diameters from 5 to 11 nm (50 to 110 Angstroms), at least 10% of the pore volume is in pores of diameters less than 7 nm (70 Angstroms) and at least 60% of the pore volume is in pores of diameters within 2 nm (20 Angstroms) above or below the average pore diameter. The catalyst is employed to hydroprocess a hydrocarbon oil, especially one containing sulphur and nitrogen.

US-A-4686030 discloses a mild hydrocracking process using a catalyst containing at least one active hydrogenation metal component supported on an amorphous porous refractory oxide, such as silica-alumina. The catalyst has a narrow pore size distribution with at least 75% of the total pore volume in pores of diameters from 5 nm to 13 nm (50 to 130 Angstroms). Preferably, at least 60% of the pore volume is in pores of diameter within 2 nm (20 Angstroms) above or below a mode pore diameter in the range from 5.5 to 10 nm (55 to 100 Angstroms). In one embodiment, a vacuum gas hydrocarbon oil is mildly hydrocracked, with simultaneous desulphurization and denitrogenation, by contact with the catalyst under mild hydrocracking conditions correlated so as to convert 10 to 50 Vol % of the oil fraction boiling 371°C (700°F) into hydrocarbon products boiling at or below 371°C (700°F). In other embodiments, the hydrocarbon oil may be desulphurized and denitrogenated before or after the mild hydrocracking.

The present invention is a process for mild hydrocracking of a sulphur- and metal-containing hydrocarbon feedstock having a substantial proportion of components boiling below 540°C (1000°F), such as residues or vacuum gas oils, by contacting the feedstock at an elevated temperature and at a pressure of less than 10.5 MPa (1500 psig) with hydrogen and a catalyst.

According to the invention, the catalyst comprises 2.0 to 6.0 wt.%, preferably 2.5 to 3.5 wt.%, of an oxide of a Group VIII metal, preferably nickel or cobalt; 12.0 to 25.0 wt.%, preferably 12.0 to 18.0 wt.%, of an oxide of molybdenum; and 0 to 3.0 wt.%, preferably 0 to 2.0 wt.% , of an oxide of phosphorus, preferably $P_2O_5$, all supported on a porous silica-alumina support containing 10 to 25.0 wt.%, based on the weight of the support, of silica. The molybdenum gradient (MbG) of the catalyst is from 1 to 10, preferably from 1 to 6, MbG being defined by the ratio

$$MbG = \frac{Mb: Al \text{ atomic ratio for catalyst pellet exterior}}{Mb: Al \text{ atomic ratio for catalyst pellet interior}}$$

and in that the catalyst has a total surface area of 150 to 250 $m^2$/g and a total pore volume of 0.75 to 0.92 $cm^3$/g with a pore diameter distribution such that pores having diameters of less than 10 nm constitute 20.0 to 40.0 %, pores having diameters of 10 to 16 nm constitute 28.4 to 34.1 %, pores having diameters of greater than 16 nm constitute 30.0 to 50.0 %, of the total pore volume of the said catalyst and macropores having diameters greater than 25 nm constitute 25.0 to 40.0 % of the total pore volume of said catalyst.

In addition, the catalysts used according to the invention has a total pore volume of 0.75 to 0.92 $cm^3$/g, and a surface area of 150 to 250 $m^2$/g. The pore volume distribution, as determined by mercury porosimetry, has 25 to 40% of the pore volume in macropores with diameters greater than 25 nm (250 Å) 30 to 50 % of the pore volume in pores having diameters greater than 16 nm (160 Å). 28.4 to 34.1 % of the pore volume in pores with diameters of 10 to 16 nm (100 to 160 Å) and 20 to 40 % of the pore volume in pores having diameters less than 10 nm (100 Å). The pore mode of the catalyst, as determined by the BET method, is in the range of 8 to 12 nm (80 to 120 Å). The preferred pore volume distribution, as determined by mercury porosimetry, has 28 to 35% of the pore volume in macropores with diameters greater than 25 nm (250 Å), 35 to 45 % of the pore volume in pores having diameters of 10 to 16 nm (160Å) and 24 to 32% of the pore volume in pores having diameters less than 10 nm (100 Å). The pore mode of the catalysts, as determined by the BET method, is from 8 to 12 nm (80 to 120 Å).

The use of the catalysts as defined above not only provides a hydrocarbon conversion advantage, but also maintains sediment formation at a level similar to the conventional bimodal alumina-based catalyst. The present invention is much improved over the prior art catalyst in terms of sediment formation and reactor unit operability.

The operating conditions for the process of the present invention are such as to yield a 10 to 60 vol. % conversion of the hydrocarbon feedstock boiling above 345°C into lower boiling hydrocarbon products.

The residuum feedstocks may be contacted with hydrogen and the catalyst utilizing a wide variety of reactor types. Preferred means for achieving such contact include a fixed bed hydrotreater, a single continuous-stirred-tank reactor or a single ebullated-bed reactor, or a series of 2 to 5 continuous-stirred-tank or ebullated-bed reactors, with ebullated bed reactors being particularly preferred. The process of the instant invention is particularly effective in achieving high conversion rates of fraction boiling above 540°C into lower boiling fractions, while maintaining desirable levels of conversions of fraction boiling above 345°C, sediment formation, and HDS activity, compared to the results obtained with the use of conventional bimodal alumina-based catalysts.

The decreasing demand for heavy fuel oils has caused refiners to seek ways to convert heavier hydrocarbon feedstocks into light products of more value. To increase mid-distillate production, the refiner has several process options. They include hydrocracking, fluid catalytic cracking, and coking, which all require heavy investments in the refineries. Because of such high costs, refiners are continually searching for conversion processes which may be carried out in existing units. An additional option is to employ a mild hydrocracking (MHC) process, which is an evolution of the VGO hydrodesulphurization (HDS) process. The main feedstock for this MHC process is vacuum gas oil (VGO), but other types of the gas oils, such as coking gas oils and deasphalted oils, can be used.

The major advantage of MHC is that it can be carried out within the operating constraints of existing VGO hydrotreaters. The typical conditions for the MHC process are:

Temperature : 382 - 416°C (720 - 780°F),
Hydrogen Pressure : 4.2 - 8.4 MPa (600 - 1200 psig),
$H_2$/Oil Ratio : 168.5 - 337 $Nm^3/m^3$ (1000 - 2000 SCF/BBL),
Space Velocity : 0.4 - 1.5 v/v/h. In contrast, true high conversion hydrocracking units are operated at:
Temperature : 371 - 482°C (700° - 900° F),
Hydrogen Pressure : 12.5 - 20.8 MPa (1800 - 3000 psig),
$H_2$/Oil Ratio : 235.9 - 1011 $Nm^3/m^3$ (1400 - 6000 SCF/BBL),
Space Velocity : 0.3 - 1.5 v/v/h. The major difference between the two processes is the hydrogen pressure.

The products obtained from the MHC process are low sulphur fuel oil (60 - 80 %) and middle distillate (20 - 40%). This hydrotreated fuel oil is also an excellent feed for catalytic cracking, because of its higher hydrogen content and lower nitrogen content compared to the original feed. The quality of diesel cut produced by MHC is usually close to diesel oil specifications for the cetane index, and so can be added to the diesel pool.

The switch from a HDS mode to a MHC mode can be achieved in different ways, assuming that the refiner is equipped to recover the surplus of the middle distillate fraction. One way to increase middle distillate production from a unit loaded with HDS catalyst is to increase the operating temperature. Using a conventional hydrotreating catalyst, the MHC process typically converts 10 to 30 Vol. % of hydrocarbon feedstock boiling above 343°C (650°F) into middle distillate oils boiling at or below 343°C (650°F).

Another way to increase the middle distillate production is to replace, at least partly, a HDS catalyst on a nonacidic alumina support with a slightly acidic catalyst. Catalysts of higher activity are still being sought. The higher the activity of the catalyst, the lower the temperature required to obtain a product of given sulphur, nitrogen or metal content in any given boiling range. For VGO containing a high proportion of residuum, an HDS catalyst usually gives less than 10 Vol % conversion of the fraction boiling above 345°C. The conversion of residuum components boiling above 540°C (1000°F) into products boiling at or below 540°C (1000°F) with the known-alumina based hydrotreating catalysts is achieved primarily by thermal cracking reactions.

A particular difficulty which arises in residuum hydroprocessing units employing the currently known catalysts is the formation of insoluble carbonaceous substances (also called sediment) when the conversion is high (above 50 Vol %). High sediment may cause plugging of reactor of downstream units, such as a

EP 0 686 687 A1

fractionation unit. The higher the conversion level for a given feedstock, the greater the amount of sediment formed. This problem is more acute at low hydrogen pressure and high reaction temperature.

The process of the present invention employs a catalyst composition comprising 2.0 - 6.0, preferably 2.5 - 3.5 wt.% of an oxide of a Group VIII metal, preferably nickel or cobalt, most preferably NiO, 12.0 to 25.0 wt.%, preferably 12.0 to 18.0 wt.% of an oxide of molybdenum, most preferably $MoO_3$ and 0 to 3.0, preferably 0 to 2.0 wt.% of an oxide of phosphorus, preferably $P_2O_5$ on a porous silica-alumina support containing 10.0 to 25.0 wt.%, based on the weight of the support of silica. Most preferably, the support is gamma alumina. Group VIII, as referred to herein, is Group VIII of the Periodic Table of Elements. The Periodic Table of Elements referred to herein is found on the inside cover of the CRC Handbook of Chemistry and Physics, 55th Ed. (1974-75). Other oxide compounds which may be found in such a catalyst composition include $SO_4$ (present in less than 0.8 wt.%), and $Na_2O$ (present in less than 0.1 wt.%). The above-described silica alumina support may be purchased or prepared by methods well known to those skilled in the art.

In preparing the catalysts, the support containing silica is impregnated with the requisite amounts of the VIB metal oxide and Group VIII metal oxide and, optionally, phosphorus oxide, by conventional means known to those skilled in the art to yield a finished catalyst.

The Group VIII metal may be iron, cobalt, or nickel which is loaded on the support, for example, as a 10 - 30 wt.% preferably about 15 wt.%, an aqueous solution of metal nitrate. The preferred metal of this group is nickel, which may be employed as about 16 wt.% aqueous solution of nickel nitrate hexahydrate. Molybdenum may be loaded on the support employing, for example, a 10 - 20 wt.%, preferably about 15 wt.%, an aqueous solution of ammonium heptamolybdate (AHM). The phosphorus component, when utilized, may be prepared from 85 % phosphoric acid.

The active metals and phosphorus may be loaded onto the catalyst support via pore filling. Although it is possible to load each metal separately, it is preferred to impregnate simultaneously with the Group VIII metal and molybdenum compounds, phosphoric acid, as well as with stabilizers, such as hydrogen peroxide and citric acid (monohydrate), when employed. It is preferred that the catalyst is impregnated by filling 95 - 105 %, for example, 97 % of the support pore volume with the stabilized impregnating solution containing the required amount of metals and citric acid.

Finally, the impregnated support is oven-dried and then directly calcined, preferably at 538 - 621°C (1000 to 1150°F) for 20 minutes to 2 hours in flowing air.

A hydroconversion process, such as a mild hydrocracking process, which preferentially removes sulphur and nitrogen from the converted product stream with components having boiling points less than 540°C is desirable in those instances where there is less concern over the quality of the unconverted product stream, but, rather, where the primary concern is the quality of the distillate product from the hydroconversion process. It is well known to those skilled in the art that high heteroatom contents of distillate hydroconversion products have an adverse effect on fluid catalytic cracking of the heavier gas oils having a boiling point of 343 - 540°C (650 to 1000°F), and that extensive hydrotreating of the distillate streams would be required to meet the strict mandated levels of heteroatoms in distillate fuels. The demands placed upon catalyst compositions make it difficult to employ a single catalyst in a hydroconversion process, such as a mild hydrocracking process, which will achieve effective levels of sulphur and nitrogen removal from the converted product stream having components with boiling points below 540°C (1000°F). The catalysts employed in the process of the present invention, however, is capable of achieving such results because it has an optimized micropore diameter to overcome the diffusion limitations for hydrotreatment of the converted product molecules, but it also does not contain such large macropores as would allow poisoning of the catalysts pellet interior. As previously described, the catalyst also has a specified pore size distribution such that pores with diameters less than 5.5 nm (55 Å) are minimized, as these pores are easily plugged with contaminants during hydroprocessing.

Catalyst Examples A, B, C, D and E, whose properties are described in Table I below, as well as Catalyst Examples F, G and H, whose properties are described in Table II below, are catalysts prepared in the manner set otu above, which may be employed in the process of this invention while the properties of the Support A used in processing Catalyst A, Support EX used in preparing Catalyst E, and Support GX employed in preparing Catalyst G are described in Table III below. The catalyst were prepared with a commercially available silica-alumina support obtained from American Cyanamid, and are available in the from of extrudates in the diameter range of 0.89 - 1.04 mm (0.035 - 0.041 inch).

The silica content of the catalysts described in Tables I and II is based on the weight of the catalyst support.

5

EP 0 686 687 A1

TABLE I

NiMo CATALYSTS ON SILICA-ALUMINA SUPPORTS

| Catalyst | A | B | C | D | E |
|---|---|---|---|---|---|
| Impreg. Sol'n. | Ni-Mo ($H_2O_2$) | Ni-Mo ($H_2O_2$) | Ni-Mo ($H_2O_2$) | Ni-Mo (Citric Acid) | Ni-Mo (Phosphoric Acid) |
| $SiO_2$ wt.% | 4 | 8 | 16 | 16 | 8 |
| $P_2O_5$ wt.% | 0 | 0 | 0 | 0 | 1.6 |
| NiO wt.% | 3.3 | 3.3 | 3.2 | 3.2 | 3.2 |
| $MoO_3$ wt.% | 14.1 | 13.3 | 11.4 | 14.7 | 13.5 |
| Pore Volume Distribution by Hg Porosimetry; Surface Area by Nitrogen BET | | | | | |
| Total PV, $cm^3$/g | 0.64 | 0.77 | 0.85 | 0.79 | 0.67 |
| PV > 25 nm % TPV | 10.7 | 14.3 | 31.8 | 32.9 | 9.0 |
| PV > 16 nm % TPV | 14.1 | 32.5 | 39.8 | 41.8 | 22.4 |
| PV < 16 nm % TPV | 84.4 | 67.5 | 61.2 | 59.4 | 76.1 |
| PV < 10 nm % TPV | 15.6 | 5.2 | 31.8 | 35.9 | 7.5 |
| PV < 5.5 nm % TPV | 0 | 0 | 0.5 | 0 | 0 |
| PV 10-16 NM % TPV | 70.3 | 62.3 | 30.6 | 31.6 | 68.7 |
| PM at (dv/dD) max nm | 11.5 | 13.8 | 8.3 | 7.9 | 13.2 |
| PM (BET) nm | 10.6 | 13.8 | 8.8 | 6.8 | 12.9 |
| Surf. Area, $m^2$/g | 194 | 171 | 198 | 193 | 163 |
| HDS-MAT, $C_{0.5g}$, % | 93 | 87 | 64 | 57 | 69 |
| Metals Distribution by XPS Analysis | | | | | |
| $(Mo/Al)_{int}$ | 0.12 | 0.10 | 0.08 | 0.08 | 0.11 |
| $(Ni/Al)_{int}$ | 0.013 | 0.015 | 0.012 | 0.010 | 0.018 |
| Mo Gradient | 6.0 | 5.4 | 7.9 | 1.12 | 5.8 |
| Ni Gradient | 1.4 | 1.1 | 1.8 | 1.2 | 1.4 |

TABLE II

| NiMo CATALYSTS ON SILICA-ALUMINA SUPPORTS | | | |
|---|---|---|---|
| Catalyst | F | G | H |
| Impreg. Sol'n. | Ni-Mo (Citric Acid) | Ni-Mo (Citric Acid) | Ni-Mo (Phosphoric Acid) |
| $SiO_2$ wt.% | 16 | 16 | 16 |
| $P_2O_5$ wt.% | 0 | 0 | 1.6 |
| $MoO_3$ wt.% | 14.2 | 14.2 | 15.0 |
| NiO wt.% | 3.1 | 2.8 | 3.2 |
| Total PV, wt.% | 0.88 | 0.82 | 0.78 |
| PV > 25 nm % TPV | 28.4 | 31.7 | 33.3 |
| PV > 16 nm % TPV | 36.4 | 40.2 | 42.3 |
| PV < 5.5 nm % TPV | 2.2 | 1.9 | |
| PV < 16 nm % TPV | 63.6 | 59.8 | 57.7 |
| PV < 10 nm % TPV | 35.2 | 24.4 | 25.6 |
| PV 10-16 nm % TPV | 28.4 | 34.1 | 32.1 |
| PM at (dv/dD) max nm | 9.3 | 11.0 | 8.8 |
| PM (BET), nm | 9.8 | 10.9 | 8.4 |
| Surf. Area, $m^2/g$ | 239 | 193 | 173 |
| HDS-MAT, $C_{0.5g}$, % | 92 | 84 | 50 |
| Metals Distribution by XPS Analysis | | | |
| $(Mo/Al)_{int}$ | 0.11 | 0.10 | 0.10 |
| $(Ni/Al)_{int}$ | 0.010 | 0.009 | 0.010 |
| Mo Gradient | 2.2 | 3.7 | 1.4 |
| Ni Gradient | 1.8 | 3.1 | 1.3 |

Note: In Tables III and IV, the suffix X denotes the support for the catalyst identified by the same letter. The contact angle used in the determination of median Pore Mode by Volume, denoted as MPD (Vol), for the supports and the finished catalysts was 140 and 130 degrees, respectively.

TABLE III

| PROPERTIES OF SILICA-ALUMINA SUPPORTS | | | |
|---|---|---|---|
| Catalyst Support | AX | EX | GX |
| $SiO_2$ wt.% | 4 | 8 | 16 |
| $NH_3$ Desorbed, $cm_3/g$ | 11.8 | 10.6 | 11.1 |
| Pore Volume Distribution by Hg Porosimetry | | | |
| TPV $cm_3/g$ | 0.81 | 0.85 | 1.04 |
| PV > 25 nm % TPV | 8.6 | 11.8 | 24.0 |
| PV > 16 nm % TPV | 14.8 | 25.9 | 40.4 |
| PV < 16 nm % TPV | 85.2 | 75.3 | 59.6 |
| PV < 10 nm % TPV | 19.8 | 14.1 | 20.2 |
| PV 10-16 nm % TPV | 65.4 | 61.2 | 39.4 |
| MPD (Vol.), nm | 11.7 | 12.8 | 10.2 |
| TSA ($N_2$), $m^2/g$ | N/A | 187 | N/A |

The properties of two commercially available hydroprocessing catalysts are set forth in Table V below. All of these catalysts are available state of the art catalysts sold for use in hydroprocessing residuum oils. Catalyst A, which is American Cyanamid HDS-1443B catalyst, is referred to in this specification as the standard reference catalyst.

TABLE IV

NiMo CATALYSTS ON SILICA-ALUMINA SUPPORTS

| Catalyst | DX | D | BX | B | FX | F |
|---|---|---|---|---|---|---|
| Impreg. Sol'n. | Support | Catalyst Ni-Mo (Citric Acid) | Support | Catalyst Ni-Mo (H$_2$O$_2$) | Support | Catalyst Ni-Mo (Citric Acid) |
| NH$_3$ Desorbed, cc/g | 4.7 | | 11.0 | | 11.1 | |
| SiO$_2$ wt.% | 16 | | 8.0 | | 16 | |
| MoO$_3$ wt.% | | 14.7 | | 13.3 | | 14.2 |
| NiO, wt.% | | 3.2 | | 3.3 | | 3.1 |
| Pore Volume Distribution by Hg Porosimetry | | | | | | |
| TPV, cm$^3$/g | 1.04 | 0.79 | 0.99 | 0.77 | 1.06 | 0.88 |
| PV > 25 nm % TPV | 32.7 | 31.6 | 15.2 | 14.3 | 30.2 | 28.4 |
| PV > 16 nm % TPV | 41.3 | 35.4 | 34.3 | 32.5 | 36.8 | 36.4 |
| PV < 16 nm % TPV | 58.7 | 59.5 | 65.7 | 67.5 | 63.2 | 63.6 |
| PV < 10 nm % TPV | 36.8 | 30.4 | 9.1 | 5.2 | 40.6 | 35.2 |
| PV 10-16 NM % TPV | 27.9 | 29.1 | 56.6 | 62.3 | 22.6 | 28.4 |
| as % of PV < 25 nm | 41 | 43 | 67 | 73 | 32 | 39 |
| MPD (VOL), nm | 10.4 | 10.5 | 11.4 | N/A | 8.7 | 9.3 |
| TSA (N$_2$), m$^2$/g | 212 | 187 | N/A | 171 | N/A | 239 |

EP 0 686 687 A1

8

Pore structure values set out in Tables I to V were determined using Nicrometrics Autopore 9220 Mercury Porosimetry Instrument. In the Tables, reference to BET means values measured by the Brunauer-Emmett-Teller Techniques.

TABLE V

| ALUMINA BASED CATALYSTS AS CONTROL EXAMAPLES | | |
|---|---|---|
| Catalyst | H | J |
| Impreg. Sol'n.<br>$MoO_3$ wt.%<br>NiO wt.% | Ni-Mo<br>11.5-14.5<br>3.2-4.0 | Ni-Mo<br>14.5-15.5<br>3.0-3.5 |
| Pore Volume Distribution by Hg Porosimetry | | |
| Total PV, $cm^3/g$<br>PV > 25 nm % TPV<br>PV > 16 nm % TPV<br>PV < 16 nm % TPV<br>PV < 10 nm % TPV<br>PV 10-16 nm % TPV<br>PM at (dv/dD) max nm<br>PM (BET), nm<br>Surf. Area, $m^2/g$<br>HDS-MAT, $C_{0.5g}$, %t | 0.74<br>33.8<br>37.8<br>62.2<br>58.1<br>4.1<br>5.0<br>4.6<br>314<br>73 | 0.64<br>7.8<br>17.2<br>84.4<br>9.4<br>75.1<br>12.6<br>10.5<br>194<br>88 |
| Metals Distribution by XPS Analysis | | |
| $(Mo/Al)_{int}$<br>$(Ni/Al)_{int}$<br>Mo Gradient<br>Ni Gradient | 0.09<br>0.012<br>1.2<br>1.6 | 0.012<br>0.016<br>3.1<br>1.0 |

A preferred feature of the catalyst composition used according to the present invention is that the above-described oxide of molybdenum, preferably $MoO_3$, is distributed on the above-described porous alumina support in such a manner that the molybdenum gradient (MbG) of the catalyst has a value of 1.0 to 10.0. As used in this description and in the appended claims, the phrase "molybdenum gradient" means that the ratio of a given catalyst pellet exterior molybdenum/aluminium atomic ratio to a given catalyst pellet interior molybdenum/aluminium atomic ratio has value of 1.0 to 10.0, preferably 1.0 to 6.0, most preferably 1.0 to 5.0, the atomic ratios being measured by X-ray photoelectron spectroscopy (XPS), sometimes referred to as Electron Spectroscopy for Chemical Analysis (ESCA), i.e.

$$MbG = \frac{Mb: Al \text{ atomic ratio for catalyst pellet surface}}{Mb: Al \text{ atomic ratio for catalyst pellet interior}}$$

It is theorised that the molybdenum gradient is strongly affected by the impregnation of molybdenum on the catalyst support, and the subsequent drying of the catalyst during its preparation. ESCA data on catalyst pellet exteriors and interiors were obtained on an ESCALAB MKII instrument, available from V.G. Scientific Ltd., which uses a 1253.6 electron volt magnesium X-ray source. Atomic percentage values were calculated from the peak areas of the molybdenum $3_{p3/2}$ and aluminium $2_{p3/2}$ signals, using the sensitivity factors supplied by V.G. Scientific Ltd. The value of 74.7 electron volts for aluminium was used as a reference binding energy.

To determine the molybdenum/aluminium atomic ratio of a given catalyst pellet exterior, the catalyst pellets were stacked flat on a sample holder, and subjected to ESCA analysis. For the catalyst used according to the present invention the molybdenum/aluminium atomic ratio of the catalyst pellet exterior is in the range 0.12 to 0.75, preferably 0.12 to 0.42. This exterior molybdenum/aluminium atomic ratio is considerably greater than the Mo/Al catalyst surface atomic ratio of 0.03 to 0.09 disclosed in US-A-4670132.

To determine the molybdenum/aluminium atomic ratio of a given catalyst pellet interior, the catalyst pellets were crushed into a powder, placed firmly in a sample holder, and subjected to ESCA analysis. For the catalyst used according to the present inevtion, the molybdenum/aluminium atomic ratio of the catalyst pellet interior (i.e., the molybdenum/aluminium ratio of the interior portion of the powder, which is assumed to be representative of the interior portion of the pellet) is in the range 0.8 to 0.15 preferably 0.11 to 0.12.

The molybdenum/aluminium atomic ratios of the total catalyst composition used according to the present inventing, as determined by conventional means (i.e., Atomic Absorption (AA) or Inductively Coupled Plasma (ICP) spectroscopy) is in the range 0.060 to 0.075, preferably 0.062 to 0.071. To determine the total catalyst composition molybdenum/aluminium atomic ratio, catalyst pellets were ground to a powder and digested in acid to form an ionic solution. The solution was then measured by AA or ICP to determine Mo ion concentration, which was then adjusted to $MoO_3$ concentration. Alumina ($Al_2O_3$) concentration was back-calculated from the direct measurement of the concentrations of the other components (e.g., Ni, Fe, Na, S).

The HDS Microactivity test (HDS-MAT) was used to evaluate the intrinsic activity of catalysts in the absence of diffusion and using a model sulphur compound as a probe. The catalyst, ground to a 0.250 - 0.595 mm (30 - 60 mesh) fraction, is presulphided at 399°C (750°F) with a 10% $H_2S/H_2$ mixture for 2 hours. The presulphided catalyst is exposed to benzothiophene-containing feed at 288°C (550°F) and flowing hydrogen for approximately four hours. Cuts are taken periodically, and analyzed by gas chromatography for the conversion of benzothiophene into ethylbenzene. The results obtained with HDS-MAT tests, as well as the Mo and Ni gradients of the catalyst described, are shown below in Tables I and II.

Tables III and IV show the pore volume distributions and surface areas of six silica-alumina supports with silica contents varying from 4 to 16 wt.%. As the silica content was increased from 4 to 16 %, the total pore volume (TPV) and the macroporosity (PV > 25 nm) increased whereas the pore volume in the region of PV 10 to 16 nm decreased. The TPV of the supports was in the range of 0.81 to 1.06 $cm^3/g$ and the macroporosity ranged from 0.07 to 0.34 $cm^3/g$. The pore volume of pores with diameters in the range 10-16 nm varied from 0.24 to 0.56 $cm^3/g$, or 32 to 72 % of the pore volume of pores having diameters less than 25 nm. A comparison of the pore volume distributions between the support and the finished catalyst indicated that the pore volume in the region of 10-16 nm was maintained essentially unchanged after impregnation of active metals.

There is another unique feature of this type of silica-alumina, in contrast to the silica-alumina used in the conventional cracking and hydrocracking catalysts. That is, the acidity of the supports, shown in Table III as $NH_4$ desorbed, does not depend in the silica content. the method employed to incorporate silica sol into the alumina gel is not effective for enhancing the acid function of the support and the finished catalysts.

The properties of five silica-alumina based NiMo catalysts are compared in Table I. Three kinds of impregnation stabilizers, hydrogen peroxide, citric acid and phosphoric acid, were used in the co-impregnation of Ni and Mo into the silica-alumina supports. It is seen that the HDS-MAT activity decreases with increasing silica content. All of the catalysts listed in Table I, except that citric acid-stabilized Catalyst D, show high Mo gradients. To improve the HDS-MAT activity of NiMo catalysts on silica alumina supports of 16% silica, the calcination temperature was lowered to 593°C (1100°F) (in the cases of Catalysts F and G). As seen in Table II, the HDS-MAT activities of Catalysts F and G are significantly higher than those of Catalysts C and H. By contrast, the Mo gradients of F and G are significantly lower than that of Catalyst C. Therefore, citric acid is the most effective impregnation stabilizer to achieve high dispersion of Mo and uniform laydown of Mo across the catalyst extrudates.

## BERTY REACTOR HYDROCRACKING

A Berty reactor, a type of continuous stirred tank reactor (CSTR), was used to determine hydrocracking activities of the catalyst used according to this invention in a diffusion-controlled regime at a low rate of deactivation. The catalysts were presulphided and the reaction was carried out at a single space velocity for 38 hours. Sample cuts were taken away every 4 hours and tested for boiling point distribution, Ni, V, S and sediment content. Using these data, conversions for the fractions boiling above 343°C + (650°F+) and 538°C + (1000°F+) were determined. The feedstock properties and the operating conditions are listed in Table VI which follows.

The hydrocracking activity was determined by comparing the percentages of products in the fractions boiling below 343°C- (650°F-) fraction and 538°C-(1000°F-) when various catalysts were evaluated under constant mild hydrocracking conditions with the same feedstock. The conversion of 343°C + (650°F+) and 538°C + (1000°F+) were calculated by the equations below:

$$\text{Conversion} = \frac{Y(F) - Y(P)}{Y(F)} \times 1000 \text{ \%}$$

Y(F)  denotes the volume percentage of the 343°C + (650°F +) or 538°C + (1000°F +) fraction in the feedstock

Y(P)  denotes the volume percentage of the 343°C + (650°F +) or 538°C + (1000°F +) fraction in the products.

The boiling point distribution of the total product was determined using the ASTM D-2887 Method, Simulated Distillation by Gas Chromatography. The sediment content of the total product was measured by using the IP 375/86 Method, Total Sediment in Residual Fuels. The Total Sediment is the sum of the insoluble organic and inorganic material which is separated from the bulk of the residual fuel oil by filtration through a filter medium, and which is also insoluble in a predominantly paraffinic solvent.

## TABLE VI

### BERTY REACTOR OPERATING CONDITIONS

| 1. | PRESULPHIDING | |
|---|---|---|
| | Temperature | 399 - 427°C (750 - 800°F) |
| | Pressure | 0.38 MPa (40 psig) |
| | Gas Mixture | 10 Vol % $H_2S$ - 90 Vol % $H_2$ |
| | Gas Flow | 500 SCCM |
| | Duration | 2 H., 45 Min. |

| 2. | FEEDSTOCK | | |
|---|---|---|---|
| | | 40 Vol % Arabian Medium/Arabian Heavy (65: 35 Vol %) vacuum residuum in desulphurized vacuum gas oil | |
| | Boiling Point | IBP | 229°C (444°F) |
| | Distribution | FBP | 744°C (1371°F) |
| | 343°C+ (650°F+) | | 89.2 Vol % |
| | 482°C+ (900°F+) | | 45.6 Vol % |
| | 538°C+ (1000°F+) | | 33.5 Vol % |
| | Sulphur wt.% | 2.2 | |
| | Ni Content, ppm | 20 | |
| | V Content, ppm | 54 | |

| 3. | REACTION CONDITIONS | |
|---|---|---|
| | Temperature | 429°C (805°F) |
| | Pressure | 6.99 MPa (1000 psig) |
| | Hydrogen Feed Rate | 300 SCCM |
| | Liquid Feed Rate | 82.5 $cm^3$/h |
| | Liquid Holdup | 125 $cm^3$ |
| | Catalyst Charge | 36.9 g |
| | LHSV | 0.66 |

Data listed in Table VII, which follows, show the activity results achieved with Catalysts A, B, C and D of this invention compared to the activities exhibited by Catalyst H (the reference catalyst) and Catalyst J, which are both commercial hydroprocessing catalysts, as determined in the Berty Reactor tests.

The data presented in Table VII show that Catalysts A, B, C and D have a substantially greater activity for the 343°C+ (650°F+) conversion value than Catalyst H; that Catalysts B and D exhibit a greater activity for the 343°C+ (650°F+) conversion than Catalyst J; while Catalyst C has a 343°C+ (650°F+) conversion value about equal to that of Catalyst J; and Catalyst A exhibits a 343°C + (650°F +) conversion value somewhat less than that of Catalyst J. Catalysts A, B, C and D all show a 538°C + (1000°F +) conversion value greater than that of Catalysts H or J.

TABLE VII

| Catalyst | 343°C + (650°F +) Conversion Vol % | 538°C + (1000°F +) Conversion Vol % | IP Sediment Delta | HDM Act. % | HDS Act. % |
|---|---|---|---|---|---|
| H* | 29 | 78 | 0.7 | 80 | 69 |
| J* | 45 | 83 | 0.9 | 60 | 71 |
| A | 40 | 86 | 0.6 | 62 | 68 |
| B | 48 | 91 | 0.6 | 81 | 72 |
| C | 44 | 89 | 0.5 | 78 | 55 |
| D | 48 | 92 | 0.4 | 72 | 62 |
| Run conditions : As in Table VI above | | | | | |

* Comparison catalyst

A comparison of conversion advantages over Catalyst H, which has a bimodal pore structure, is set out in the data presented in Table VIII which follows.

TABLE VIII

| Catalyst | 343°C + (650°F +) Conversion Advanatge Vol % | 538°C + (1000°F +) Conversion Advantage Vol % | IP Sediment Delta % |
|---|---|---|---|
| H | 0 | 0 | 0 |
| J | +16 | +5 | +0.2 |
| A* | +11 | +8 | -0.1 |
| B* | +19 | +13 | -0.1 |
| C* | +15 | +11 | -0.2 |
| D* | +19 | +14 | -0.3 |
| Run conditions : As in Table VI above | | | |

* Comparison catalyst

The data presented in Table VIII show that Catalysts A, B, C and D, according to the present invention, exhibit an increase of 11 to 19 Vol % in 343°C + (650°F +) conversion, which corresponds to a 37.9 to 65.5 % improvement in relative conversion over that achieved with Catalyst H (i.e., the standard commercial catalyst). Catalysts A, B, C and D also gave an appreciable improvement in the 538°C + (1000°F +) conversion ranging from 8 to 14 Vol %, which corresponds to a 10.3 to 17.9 % improvement over that achieved with Catalyst H. The IP sediment formation of these same catalyst showed a decrease of 0.1 to 0.3 % over the sediment formation of Catalyst H.

The results set out in Table VIII clearly indicates that the silica-alumina based catalyst substantially outperforms Catalyst H or J of the prior art.

Mild hydrocracking of heavy oils containing residua on the presence of the catalyst used according to this invention comprising, for example, molybdenum oxide, nickel oxide, and, optionally, phosphorus oxide on the silica-alumina support having specified pore size distribution, and molybdenum gradient not only allows an increased production of middle distillate, and more effective conversion of residuum feedstocks, but also maintains the sediment formation at a level lower or similar to that achieved with conventional bimodal alumina-based catalysts.

## Claims

1. A process for mild hydrocracking of a hydrocarbon feedstock having a substantial proportion of components boiling below 540°C comprising contacting said hydrocarbon feedstock under conditions of elevated temperature and a hydrogen pressure of less than 10.5 MPa with a particulate catalyst characterised in that the catalyst comprises 2.0 to 6.0 wt.% of an oxide of a Group VIII metal; 12.0 to 25.0 wt.% of an oxide of molybdenum; and 0 to 3.0 wt.% of a phosphorus oxide all supported on a porous alumina support containing 10 to 25.0 wt.%, based on the weight of the support, of silica, in such a manner that the molybdenum gradient (MbG) of the catalyst has a value between 1 and 10, MbG being defined by the ratio

$$MbG = \frac{Mb: Al \text{ atomic ratio for catalyst pellet exterior}}{Mb: Al \text{ atomic ratio for catalyst pellet interior}}$$

and in that the catalyst has a total surface area of 150 to 250 $m^2/g$ and a total pore volume of 0.75 to 0.92 $cm^3/g$ with a pore diameter distribution such that pores having diameters of less than 10 nm constitute 20.0 to 40.0 %, pores having diameters of 10 to 16 nm constitute 28.4 to 34.1 %, pores having diameters of greater than 16 nm constitute 30.0 to 50.0 %, of the total pore volume of said catalyst and macropores having diameters greater than 25 nm constitute 25.0 to 40.0 % of the total pore volume of said catalyst.

2. A process according to Claim 1 characterised in that the said catalyst contains 0.1 to 2.0 wt.% of phosphorus oxide.

3. A process according to Claim 1 or 2 characterised in that the catalyst contains 16 to 25 wt.% of silica.

4. A process according to any one of Claims 1 to 3 characterised in that the Group VIII metal is nickel.

5. A process according to Claim 4 characterised in that the catalyst comprises 2.5 to 3.5 wt.% NiO and 12.0 to 18.0 wt.% $MoO_3$.

6. A process according to any one of Claims 1 to 5 characterised in that the hydrocarbon feedstock is contacted with the catalyst in a fixed bed reactor.

7. A process according to any one of Claims 1 to 5 characterised in that the hydrocarbon feedstock is contacted with the catalyst in a single ebullated bed reactor or in a series of ebullated bed reactors.

8. A process according to any one of Claims 1 to 5 characterised in that the hydrocarbon feed is contacted with the catalyst in a single continuous stirred tank reactor, or in a series of 2 to 5 continuous stirred tank reactors.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | US-A-5 047 142 (TEXACO) | | C10G47/12 B01J35/10 |
| D,A | US-A-4 846 961 (UNION OIL) | | |
| D,A | US-A-4 670 132 (INTEVEP) | | |
| D,A | US-A-4 620 922 (STANDARD OIL) | | |

TECHNICAL FIELDS SEARCHED (Int.Cl.6)

C10G
B01J

The present search report has been drawn up for all claims

| Place of search | Date of completion of the search | Examiner |
|---|---|---|
| THE HAGUE | 10 November 1994 | Michiels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)